# EUROPÄISCHE PATENTSCHRIFT

(11) **EP 2 524 487 B1**
(45) Veröffentlichungstag und Bekanntmachung des Hinweises auf die Patenterteilung: **17.09.2014**
(21) Anmeldenummer: 11701035.5
(22) Anmeldetag: 10.01.2011
(51) Int. Cl.: H04L 29/06, H04L 12/46

(54) **SYSTEM ZUR DURCHFÜHRUNG VON FERNDIENSTLEISTUNGEN FÜR EINE TECHNISCHE ANLAGE**
SYSTEM FOR DELIVERY OF REMOTE SERVICES FOR A TECHNICAL EQUIPMENT
SYSTEME DE DELIVRANCE DES SERVICES DISTANTS POUR L'EQUIPEMENT TECHNIQUE

(30) Priorität: 12.01.2010 DE 102010000824
(43) Veröffentlichungstag der Anmeldung: 21.11.2012
(73) Patentinhaber: Siemens Aktiengesellschaft, 80333 München (DE)
(72) Erfinder: BALINT, Thomas, 76831 Billigheim (DE); BAUER, Jörg, 91080 Uttenreuth (DE); KISSLING, Jan, 76676 Graben-Neudorf (DE)
(86) Internationale Anmeldenummer: PCT/EP2011/050200
(87) Internationale Veröffentlichungsnummer: WO 2011/086041

(56) Entgegenhaltungen:
- EP-A1- 1 912 381
- WO-A2-2007/070154
- US-A1- 2004 053 601
- US-A1- 2008 192 739
- US-B1- 7 389 534

## Beschreibung

Die Erfindung betrifft ein System zur Durchführung von Ferndienstleistungen für eine technische Anlage gemäß Patentanspruch 1.

Ferndienstleistungen (häufig auch als "Remote Services" bezeichnet) bieten im Lebenszyklus einer technischen Anlage (z.B. einer industriellen Produktionsanlage, einem Kraftwerk, einer Stückgutbeförder- und verteilanlage oder der Gebäudetechnik in einem großen Gebäude) eine Vielzahl von Anwendungsmöglichkeiten. Hierzu zählen z.B. Fern-Software-Aktualisierungen (Remote Update Services), Fernüberwachungen (Remote Conditioning Monitoring), Fernwartungen (Remote Maintenance) und nicht zuletzt die Fernunterstützung bei der Fehlerbehebung.

Um diese Dienstleistungen anbieten zu können, wird eine Kommunikationsverbindung über ein öffentliches Netzwerk (z.B. dem Internet) in die Anlage, üblicherweise in ein nichtöffentliches internes Netzwerk der Anlage, benötigt. An die internen Netzwerke in derartigen Anlagen werden besondere Sicherheitsanforderungen gestellt. Aus IT-Sicht sind dies Nachvollziehbarkeit, Transparenz und IT-Sicherheit. Aus Sicht des betrieblichen Ablaufes ist dies die Betriebssicherheit der Anlage.

Die Verbindung von außen über das öffentliche Netzwerk in das anlageninterne nichtöffentlichem Netzwerk erfolgt deshalb häufig durch eine sogenannte "Tunnelverbindung". Unter einer Tunnelverbindung wird hierbei eine Kommunikationsverbindung zwischen einer von der Anlage entfernten Einrichtung über ein öffentliches und damit nichtsicheres Netzwerk wie z.B. das Internet zu einer anlageninternen Einrichtung verstanden, bei der eine Identifizierung und Authentifizierung der Kommunikationspartner erfolgt und bei der durch Datenverschlüsselung die Vertraulichkeit der Daten (d.h. es ist kein Zugang auf die Daten für Dritte) sowie die Integrität der Daten (d.h. es ist keine Veränderung der Daten durch Dritte möglich) gewährleistet ist. Eine derartige Tunnelverbindung ist beispielsweise über das Internet durch eine VPN (Virtual Private Network)-Verbindung möglich, die ein Internet-Sicherheitsprotokoll wie z.B. IPsec (Internet Protocol Security) nutzt. Dabei ist zwar der IT-Sicherheit genüge getan, allerdings sind Nachvollziehbarkeit und Transparenz der Verbindung nicht oder nur in bedingtem Umfang gegeben.

Werden für eine Anlage mehrere unterschiedliche Ferndienstleistungen durchgeführt, werden diese über entsprechend zahlreiche und meist unterschiedlich sichere Tunnelverbindungen in die Anlage realisiert. Durch diese zahlreichen Verbindungen entsteht beim Betreiber der Anlage ein hoher Administrationsaufwand, um ein Mindestmaß an Sicherheit insbesondere in Bezug auf die Transparenz und Nachvollziehbarkeit zu gewährleisten. Aus diesem Grund wünschen Anlagenbetreiber möglichst wenige Verbindungen dieser Art und stehen damit neuen Ferndienstleistungen skeptisch gegenüber.

Aus der WO 2007/070154 A2 ist eine Lösung für eine Fernwartung einer Produktionsumgebung über ein "remote network" bekannt, zu dem einem Service-Provider ein sicherer Zugang gewährt werden kann.

Es ist deshalb Aufgabe vorliegender Erfindung, bei einem System zur Durchführung von Ferndienstleistungen für eine technische Anlage gemäß Oberbegriff des Patentanspruchs 1 bei hoher IT-Sicherheit und hoher Anlagen-Betriebssicherheit den Administrationsaufwand auf Seite des Anlagenbetreibers zu verringern und somit die Durchführung einer Vielzahl von Ferndienstleistungen in einer Anlage zu ermöglichen.

Die Lösung dieser Aufgabe gelingt durch ein System gemäß Patentanspruch 1. Vorteilhafte Ausgestaltungen sind Gegenstand der Unteransprüche.

Ein erfindungsgemäßes System zur Durchführung von Ferndienstleistungen für eine technische Anlage, umfasst
- ein erstes Ferndienstleistungssystem mit einer ersten von der Anlage entfernten Einrichtung zur Durchführung einer ersten Ferndienstleistung, einer ersten anlageninternen Einrichtung und einer ersten Tunnelverbindung zur Übertragung von Daten zwischen der ersten von der Anlage entfernten Einrichtung und der ersten anlageninternen Einrichtung, und
- ein zweites Ferndienstleistungssystem mit einer zweiten von der Anlage entfernten Einrichtung zur Durchführung einer zweiten Ferndienstleistung, einer zweiten anlageninternen Einrichtung und einer zweiten Tunnelverbindung zur Übertragung von Daten zwischen der zweiten von der Anlage entfernten Einrichtung und der zweiten anlageninternen Einrichtung.
Dabei verläuft erfindungsgemäß die zweite Tunnelverbindung durch die erste Tunnelverbindung.

Die Datenverbindung zu der zweiten anlageninternen Einrichtung erfolgt somit bildhaft durch eine "doppelte Tunnelverbindung" bzw. "einen Tunnel in einem Tunnel". Von außen in die Anlage ist somit physikalisch nur die erste Tunnelverbindung notwendig, über die dann wiederum auch die zweite Tunnelverbindung verläuft. Für den Anlagenbetreiber ergibt sich hierdurch im Wesentlichen nur ein Administrationsaufwand für die erste Tunnelverbindung und somit nur für eine einzige anstatt für zwei Tunnelverbindungen. Die erste Tunnelverbindung kann dabei besonders sicher ausgebildet werden, so dass auch eine vergleichsweise weniger sichere zweite Tunnelverbindung auf das Sicherheitsniveau der ersten Tunnelverbindung gehoben werden kann. Hierdurch kann auch eine hohe Betriebsicherheit der Anlage erzielt werden. Durch die erste Tunnelverbindung können zusätzlich auch noch weitere Tunnelverbindungen weiterer Ferndienstleistungssysteme verlaufen, ohne dass der Administrationsaufwand auf Seite des Anlagenbetreibers wesentlich erhöht und die Betriebssicherheit eingeschränkt wird. Das erste Ferndienstleistungssystem wird aus Sicht des zweiten und ggf. weiterer Ferndienstleistungssysteme im Grunde als Transport-Infrastruktur verwendet und realisiert eine sichere Verbindung von Anlagenkomponenten mit einem zweiten und ggf. weiteren Ferndienstleistungsanbieter(n). Die Protokolle des zweiten Ferndienstleistungssystems und ggf. der weiteren Ferndienstleistungssysteme können über diese Infrastruktur ausgetauscht werden. Aus Sicht des Anlagenbetreibers handelt es sich um eine einzige integrierte Ferndienstleistungslösung.

Dabei erfolgt die erste Tunnelverbindung über eine sichere Kommunikationsplattform, die mit dem Internet verbunden ist. Hierdurch kann weltweit von jedem Internetanschluss eine Tunnelverbindung in die Anlage aufgebaut werden.

Zur Erhöhung der Sicherheit befindet sich die sichere Kommunikationsplattform vorzugsweise in einer demilitarisierten Zone.

Gemäß einer besonders vorteilhaften Ausgestaltung erfolgt zur weiteren Erhöhung der Sicherheit auf der sicheren Kommunikationsplattform eine Datenspiegelung.

Die Erfindung ist besonders vorteilhaft dann einsetzbar, wenn die erste Tunnelverbindung eine andere Datenverschlüsselung nutzt als die zweite Tunnelverbindung.

Damit ein Nutzer des zweiten Ferndienstleistungssystems sich nicht sowohl beim ersten als auch beim zweiten Ferndienstleistungssystem, sondern nur einmal bei einem der zwei Ferndienstleistungssysteme authentifizieren muss, können die beiden Ferndienstleistungssysteme mit einer gemeinsamen Authentifizierungsinstanz verbunden sein.

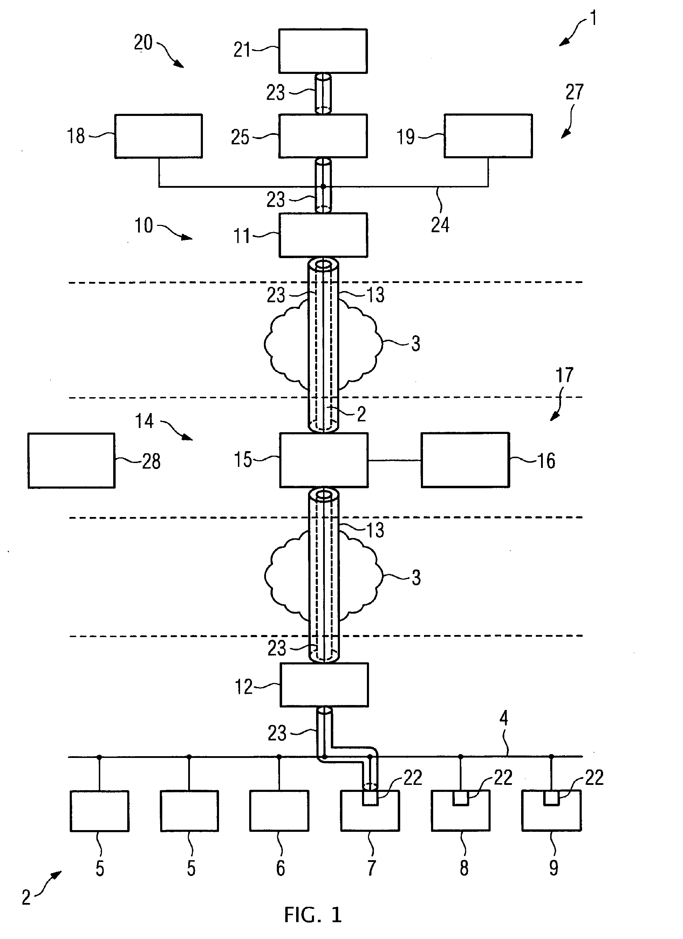

Die Erfindung sowie vorteilhafte Ausgestaltungen der Erfindung werden im Folgenden anhand eines Ausführungsbeispieles in der Figur näher erläutert.

Ein in der einzigen Figur gezeigtes System 1 zur Durchführung von Ferndienstleistungen für eine technische Anlage 2 (z.B. eine industrielle Produktionsanlage, ein Kraftwerk, eine Stückgutbeförder- und verteilanlage oder die Gebäudetechnik in einem großen Gebäude) umfasst ein erstes Ferndienstleistungssystem 10 und ein zweites Ferndienstleistungssystem 20. Im Folgenden wird davon ausgegangen, dass die beiden Ferndienstleistungssysteme 10, 20 vom gleichen Ferndienstleistungsanbieter zur Durchführung von Ferndienstleistungen genutzt werden. Dies ist aber nur beispielhaft. In entsprechender Weise können die beiden Ferndienstleistungssysteme 10, 20 auch von jeweils unterschiedlichen Ferndienstleistungsanbietern zur Durchführung von Ferndienstleistungen genutzt werden.

Das erste Ferndienstleistungssystem 10 umfasst eine von der Anlage 2 entfernte Einrichtung in Form eines Zugangs-Routers 11, eine anlageninternen Einrichtung in Form eines Zugangs-Routers 12 und eine sichere Kommunikationsplattform 14, die einen Zugangs-Server 15 und einen Daten-Server 16 umfasst und die sich in einer demilitarisierten Zone 17 des Internets 3 befindet. Der Zugangs-Router 12 ist an ein internes nichtöffentliches Netzwerk 4 der Anlage angeschlossen, an das beispielsweise auch Komponenten 5 eines Automatisierungssystems der Anlage 2 und ein Computerized Maintenance Management System (CMMS) 6 der Anlage 2 angeschlossen sind. Der Zugangs-Router 11 befindet sich in einer demilitarisierten Zone 27 des Ferndienstleistungsanbieters und ist mit einem internen nichtöffentlichen Netzwerk 24 (z.B. einem Intranet) des Ferndienstleistungsanbieters verbunden.

Zwischen dem Zugangs-Router 11 und dem Zugangs-Router 12 ist mit Hilfe der sicheren Kommunikationsplattform 14 eine Tunnelverbindung 13 durch das Internet 3 aufbaubar. Daten der Anlage 2, z.B. Daten über einen Herstellungsprozess, von den Automatisierungsgeräten 5 oder dem CMMS-System 6, können über die Tunnelverbindung 13 an den Ferndienstleistungsanbieter übertragen und umgekehrt Daten des Ferndienstleistungsanbieters an diese Komponenten übertragen werden. Die Daten können dabei automatisch oder auf explizite Anforderung durch den Ferndienstleistungsanbieter übertragen werden.

Die Tunnelverbindung 13 ist dabei in der sicheren Kommunikationsplattform 14 nicht "durchgeschaltet", sondern in dem Zugangsserver 15 durch eine "Reverse-Proxy"-Funktionalität unterbrochen. Eine aus der Anlage 2 über den Zugangs-Router 12 oder von dem Ferndienstleitungsanbieter über den Zugangs-Router 11 aufgebaute Verbindung wird im Zugangs-Server 15 terminiert. Die dabei übertragenen Daten werden im Daten-Server 16 abgespeichert. Der Zugangs-Server 15 baut dann die weitere Verbindung zum Ferndienstleitungsanbieter bzw. zur Anlage 2 auf und überträgt darüber die in dem Daten-Server 16 gespeicherten Daten.

In der sicheren Kommunikationsplattform 14 wird somit die ankommende Kommunikation "gespiegelt". Diese Spiegelung findet jedoch nur für vordefinierte Protokolle statt. Damit wird gewährleistet, dass eine Kommunikation zwischen dem Ferndienstleitungsanbieter und der Anlage 2 nur über explizit erlaubte Protokolle stattfindet. Die genannte Spiegelung und der Verbindungsaufbau zur Anlage 2 bzw. zum Ferndienstleitungsanbieter erfolgt ausschließlich nach erfolgreicher Authentifizierung und Authorisierung am jeweiligen Zugangs-Router 11 bzw. 12, wobei die dafür benötigten Verbindungsinformationen und Passwörter gesichert übertragen werden.

Diese Architektur bietet einen zuverlässigen Schutz vor nicht-autorisierten Zugriffen von dem Ferndienstleitungsanbieter in die Anlage und umgekehrt, vor Zugriffen aus dem Internet, vor Übertragung von Viren und ähnlichen Schadens-Programmen von dem Ferndienstleitungsanbieter in die Anlage und umgekehrt, sowie vor Mißbrauch von vertraulichen Zugangsdaten.

Zur Sicherstellung der Vertraulichkeit, Authentizität und Integrität der Kommunikation über die Tunnelverbindung wird bevorzugt das IPSec-Protokoll eingesetzt. In den Routern 11, 12 befinden sich dann die IPSec-Endpunkte. Zum Austausch von Schlüsselinformationen kann das Internet Security Association and Key Management Protocol (ISAKMP) eingesetzt werden.

Bevorzugt handelt es sich bei der Tunnelverbindung 13 um eine VPN (Virtual Private Network)-Tunnelverbindung, d.h. die Router 11 und 12 sind als VPN-Router mit breitbandigem Internetzugang ausgebildet. Hiermit stehen bei sehr geringen Kommunikationskosten hohe Bandbreiten für leistungsfähige Ferndienstleistungen und auch für zukünftige Mehrwert-Dienstleistungen zur Verfügung.

Der Zugangs-Router 12 überprüft die Autorisierung des Ferndienstleistungsanbieters für einen Zugriff auf die Anlage 2. Im Fall einer Autorisierung übergibt er dem Ferndienstleistungsanbieter ein temporäres Passwort für den Zugang zum Zugangsserver 15. Der Zugangs-Router 11 leitet Zugangsdaten und das temporäre Passwort zu dem Zugangs-Server 15. Der Ferndienstleistungsanbieter beantragt beim Zugangs-Server 15 Zugang zu der Anlage 2 durch Angabe seines Passworts. Der Zugangs-Server 15 vergleicht das Passwort mit dem von dem Zugangs-Router 12 erhaltenen Passwort und stellt im Fall einer Übereinstimmung die Tunnelverbindung 13 des Ferndienstleistungsanbieters auf die Anlage 2 her. Der Zugangs-Router 12 kann dabei auch derart eingestellt sein, dass er nur Verbindungen von der Anlage 2 zu der sicheren Kommunikationsplattform 14 erlaubt.

Das erste Ferndienstleistungssystem 10 bietet die Möglichkeit, durch eine Datenkommunikation mit den Automatisierungskomponenten 5 oder dem CMMS-System 6 Ferndienstleistungen wie z.B. eine Fernüberwachung, Ferndiagnose oder Softwareupdates in den Automatisierungsgeräten 5 oder dem CMMS-System 6 der Anlage 2 durchzuführen. Hierzu kann der Ferndienstleistungsanbieter über eine an sein internes Netzwerk 24 angeschlossene Engineering-Station 18 oder einen Remote-Service-PC 19 über die Tunnelverbindung 13 auf die Automatisierungskomponenten 5 und das CMMS-System 6 zugreifen. Das erste Ferndienstleistungssystem 10 hat seine Stärken jedoch vor allem in der zuverlässigen und sicheren Datenübertragung über die Tunnelverbindung 13.

Das zweite Ferndienstleistungssystem 20 umfasst einen von der Anlage entfernten Server 25, der ebenso wie der Zugangs-Router 11 des ersten Ferndienstleistungssystems 10 an das nichtöffentliche Netzwerk 24 des Ferndienstleistungsanbieters angeschlossen ist, und einen Client-PC 21, der mit dem Server 25 verbunden ist.

Durch das Ferndienstleistungssystem 20 werden Dienste bereitgestellt, die in der Anlage 2 beispielsweise an einer CNC-Steuerung 7, einer Steuerung 8 der Basisautomatisierung oder an einem Standard-PC 9 verfügbar sind, die an das Netzwerk 4 angeschlossen sind und darüber mit dem Zugangs-Router 12 in Verbindung stehen. Die CNC-Steuerung 7, die Steuerung 8 der Basisautomatisierung und der Standard-PC 9 weisen hierzu jeweils einen Software-Agenten 22 auf, der einen anlageninternen Bestandteil des Ferndienstleistungssystems 20 bildet. Zusätzlich können noch weitere Komponenten wie z.B. Steuerungen der Prozessautomatisierung, MES-Systeme, CMMS-Systeme an das Ferndienstleistungssystem 20 angebunden sein.

Zwischen einem Software-Agenten 22, hier dem Softwareagenten der CNC-Steuerung 7, und dem Client-PC 21 ist eine Tunnelverbindung 23 herstellbar, über die Daten von dem Ferndienstleistungsanbieter zu dem Software-Agenten 22 der CNC-Steuerung 7 und umgekehrt übertragbar sind. Die Verschlüsselung der Daten auf der Tunnelverbindung 23 erfolgt dabei beispielsweise mit SSL und somit mit einer anderen Verschlüsselungstechnik als im Fall der Tunnelverbindung 13. Es kommt dabei ein Protokoll wie z.B. das https-Protokoll zum Einsatz, das den Einsatz eines Proxy in der Verbindung 23 erlaubt.

Die Tunnelverbindung 23 verläuft dabei in der Tunnelverbindung 13 des ersten Ferndienstleistungssystems 10. Von außen in die Anlage 2 ist somit physikalisch nur die Tunnelverbindnung 13 und somit nur eine einzige Tunnelverbindung vorhanden. Aus Sicht des Anlagenbetreibers bilden die beiden Ferndienstleistungssysteme 10, 20 somit eine einzige integrierte Ferndienstleistungslösung. Für den Anlagenbetreiber ergibt sich hierdurch im Wesentlichen nur ein Administrationsaufwand für die erste Tunnelverbindung 13. Wenn diese sicherer als die zweite Tunnelverbindung 23 ausgebildet ist, kann die zweite Tunnelverbindung 23 zudem auf das Sicherheitsniveau der ersten Tunnelverbindung 13 gehoben werden. Durch die erste Tunnelverbindung 13 können zusätzlich auch noch weitere Tunnelverbindungen weiterer Ferndienstleistungssysteme verlaufen.

Das zweite Ferndienstleistungssystem 20 hat seine Stärken vor allem in der Bereitstellung von Mehrwert (added value) Dienstleistungen, beispielsweise für OEM-Kunden von Automatisierungsprodukten. Für diese Produkte werden beispielsweise folgende Ferndienstleistungen angeboten:
- Fernüberwachungen von Steuerungsgeräten mit einer Aufzeichnung von Ereignissen in einer Historie mit Dokumentation des zu diesem Zeitpunkt aktuellen Zustands der Steuerung. Mittels der Ereignishistorie ist es möglich, den Zustand der Steuerung z. B. im Fehlerfall zu analysieren und mit früheren Zuständen zu vergleichen.
- Zustandsüberwachungen: Erfassung und Dokumentation des aktuellen Maschinenzustands auf Basis vordefinierter standardisierter Tests und kontinuierlicher Aufzeichnung von Zustandskenngrößen. Mit Hilfe von Messreihen können Trends erkannt werden, um diese als Basis für eine Optimierung der Instandhaltungs- und Serviceaktivitäten zu nutzen. Ein Maschinenbediener kann dann diese vordefinierten Tests ohne zusätzliche Ausrüstung einfach und schnell ausführen.
- Fernzugriff auf Steuerungsgeräte in der Anlage
- Datendienste: Sichern von aktuellen Steuerungsarchiven auf einem Server des Ferndienstleisters, mit der Möglichkeit, diese bei Fehlerfällen kontrolliert auf die Steuerung zurückzuspielen oder als Referenz für Vergleiche zu nutzen.
- Workflow-Dienste: Auslösung von Service- und Instandhaltungsabläufen durch Benachrichtigung über systeminterne und - externe Medien (SMS, E-Mail, Servicefälle). Planung, Überwachung und Dokumentation von Instandhaltungsaktivitäten an der Maschine.
- Administrative Dienste: Funktionen zur Administration des Systems wie z.B. Anlegen und Verwalten von Maschinen, Anlegen und Verwalten von Benutzern.

Damit sich ein Nutzer des zweiten Ferndienstleistungssystems 20 nicht sowohl beim zweiten Ferndienstleistungssystem 20 als auch beim ersten Ferndienstleistungssystem 10, d.h. zweimal, authentifizieren muss, kann ein gemeinsames Authentifizierungsmechanismus vorhanden sein. Dies ist beispielsweise dadurch möglich, dass eine gemeinsame Authentifizierungsinstanz 28 bereitgestellt wird, die in nicht näher dargestellter Weise mit beiden Ferndienstleistungssystemen 10, 20 verbunden ist. Ein Benutzer muss sich dann nur einmal einloggen und kann danach zwischen beiden Ferndienstleistungssystemen 10, 20 umschalten.

Die Anlage 2 bzw. deren Netzwerk 4, die sichere Plattform 14 und das Netzwerk 24 des Ferndienstleisters sind dabei durch nicht näher dargestellte Firewalls vor unerlaubten Zugriffen aus dem Internet 3 geschützt.

## Patentansprüche

1. System (1) zur Durchführung von Ferndienstleistungen für eine technische Anlage (2), umfassend
- ein erstes Ferndienstleistungssystem (10) mit einer ersten von der Anlage (2) entfernten Einrichtung (11) zur Durchführung einer ersten Ferndienstleistung, einer ersten anlageninternen Einrichtung (12) und einer ersten Tunnelverbindung (13) zur Übertragung von Daten zwischen der ersten von der Anlage entfernten Einrichtung (11) und der ersten anlageninternen Einrichtung (12),
- ein zweites Ferndienstleistungssystem (20) mit einer zweiten von der Anlage (2) entfernten Einrichtung (21) zur Durchführung einer zweiten Ferndienstleistung, einer zweiten anlageninternen Einrichtung (22) und einer zweiten Tunnelverbindung (23) zur Übertragung von Daten zwischen der zweiten von der Anlage (2) entfernten Einrichtung (21) und der zweiten anlageninternen Einrichtung (22),
**dadurch gekennzeichnet, dass** die zweite Tunnelverbindung (23) durch die erste Tunnelverbindung (13) verläuft und dass die erste Tunnelverbindung (13) über eine sichere Kommunikationsplattform (14) erfolgt, die mit dem Internet (3) verbunden ist.

2. System (1) nach Anspruch 1,
**dadurch gekennzeichnet, dass** sich die sichere Kommunikationsplattform (14) in einer demilitarisierten Zone (17) befindet.

3. System (1) nach Anspruch 1 oder 2,
**dadurch gekennzeichnet, dass** auf der sicheren Kommunikationsplattform (14) eine Datenspiegelung erfolgt.

4. System (1) nach einem der vorhergehenden Ansprüche,
**dadurch gekennzeichnet, dass** die erste Tunnelverbindung (13) eine andere Datenverschlüsselung nutzt als die zweite Tunnelverbindung (23).

5. System (1) nach einem der vorhergehenden Ansprüche,
**dadurch gekennzeichnet, dass** die beiden Ferndienstleistungssysteme (10, 20) mit einer gemeinsamen Authentifizierungsinstanz (28) verbunden sind.

## Claims

1. System (1) for performing remote services for a technical installation (2), comprising
- a first remote services system (10) with a first device (11) remote from the installation (2) for performing a first remote service, a first device (12) within the installation and a first tunnel connection (13) for transmission of data between the first device (11) remote from the installation and the first device (12) within the installation,
- a second remote services system (20) with a second device (21) remote from the installation (2) for performing a second remote service, a second device (22) within the installation and a second tunnel connection (23) for transmission of data between the second device (21) remote from the installation and the second device (22) within the installation,
**characterised in that** the second tunnel connection (23) runs through the first tunnel connection (13) and that the first tunnel connection (13) is made via a secure communication platform (14) which is linked to the Internet (3).

2. System (1) according to claim 1,
**characterised in that** the secure communication platform (14) is located in a demilitarized zone (17).

3. System (1) according to claim 1 or 2,
**characterised in that** data mirroring takes place on the secure communication platform (14).

4. System (1) according to one of the preceding claims, **characterised in that** the first tunnel connection (13) uses a different data encryption from the second tunnel connection (23).

5. System (1) according to one of the preceding claims, **characterised in that** the two remote services systems (10, 20) are linked to a common authentication entity (28).

## Revendications

1. Système ( 1 ) pour effectuer des services à distance pour une installation ( 2 ) technique, comprenant
- un premier système ( 10 ) de service à distance ayant un premier dispositif ( 11 ) éloigné de l'installation ( 2 ) pour effectuer un premier service à distance, un premier dispositif ( 12 ) interne à l'installation et une première liaison ( 13 ) tunnel pour la transmission de données entre le premier dispositif ( 11 ) éloigné de l'installation et le premier dispositif ( 12 ) interne à l'installation,
- un deuxième système ( 20 ) de service à distance ayant un deuxième dispositif ( 21 ) éloigné de l'installation ( 2 ) pour effectuer un deuxième service à distance, un deuxième dispositif ( 22 ) interne à l'installation et une deuxième liaison ( 23 ) tunnel pour la transmission de données entre le deuxième dispositif ( 21 ) éloigné de l'installation ( 2 ) et le deuxième dispositif ( 22 ) interne à l'installation,
**caractérisé en ce que** la deuxième liaison ( 23 ) tunnel s'étend dans la première liaison ( 13 ) tunnel et **en ce que** la première liaison ( 13 ) tunnel s'effectue par une plateforme ( 24 ) de communication sécurisée, qui est reliée à l'internet ( 3 ).

2. Système ( 1 ) suivant la revendication 1,
**caractérisé en ce que** la plateforme ( 14 ) de communication sécurisée se trouve dans une zone ( 17 ) démilitarisée.

3. Système ( 1 ) suivant la revendication 1 ou 2,
**caractérisé en ce qu'**une réflexion de données s'effectue sur la plateforme ( 14 ) de communication sécurisée.

4. Système ( 1 ) suivant l'une des revendications précédentes,
**caractérisé en ce que** la première liaison ( 13 ) tunnel utilise un chiffrement de données autre que la deuxième liaison ( 23 ) tunnel.

5. Système ( 1 ) suivant l'une des revendications précédentes,
**caractérisé en ce que** les deux systèmes ( 10, 20 ) de service à distance sont reliés à une instance ( 28 ) d'authentification commune.
